# EUROPEAN PATENT SPECIFICATION

(11) **EP 2 728 696 B1**
(45) Date of publication and mention of the grant of the patent: **28.09.2016**
(21) Application number: 13188723.4
(22) Date of filing: 15.10.2013
(51) Int. Cl.: H02J 4/00

(54) **SYSTEM AND METHOD FOR USING A NETWORK TO CONTROL MULTIPLE POWER MANAGEMENT SYSTEMS**
SYSTEM UND VERFAHREN ZUR VERWENDUNG EINES NETZWERKS ZUR STEUERUNG EINES MEHRFACHLEISTUNGSVERWALTUNGSSYSTEMS
SYSTÈME ET PROCÉDÉ D'UTILISATION D'UN RÉSEAU POUR COMMANDER PLUSIEURS SYSTÈMES DE GESTION DE PUISSANCE

(30) Priority: 30.10.2012 US 201213663847
(43) Date of publication of application: 07.05.2014
(73) Proprietor: Kohler Co., Kohler, WI 53044 (US)
(72) Inventor: Mauk, Richard A., Sheboygan, WI 53083 (US)
(74) Representative: Hoefer & Partner Patentanwälte mbB

(56) References cited:
- WO-A1-2011/027195
- WO-A1-2011/085477
- US-A1- 2008 150 360
- US-A1- 2008 313 006

## Description

### CLAIM OF PRIORITY

This patent application claims the benefit of priority, under 35 U.S.C. § 119(e), to U.S. Provisional Patent Application Serial No. 61/577,816, entitled "SYSTEM AND METHOD FOR USING A NETWORK TO CONTROL A POWER MANAGEMENT SYSTEM," filed on December 20, 2011.

### TECHNICAL FIELD

Embodiments pertain to a system and method for controlling multiple power management systems, and more particularly to system and method for using a network to control multiple power management systems.

### BACKGROUND

Some existing power management systems are able to control a power management system using a network. These existing systems typically require elaborate hardware systems and/or extensive highly technical programming in order to control the electronic components that make up the power management systems. These requirements add unwanted expenses that are usually associated with operating and/or installing the power management systems.

In addition, existing power management systems often require a separate device in order to have a user remotely communicate with the electronic components within the power management system. These additional and separate devices add unwanted time and cost to the power management system (both hardware and installation). These additional devices also add security risks associated with remotely accessing the electronic components in the power management system. WO 2011/027195 A1 discloses a method and a system for power management for a plant electrical network including power distribution equipment, power actuators, local generators and loads of an industrial plant. A plant-wide communication network and a plurality of controllers for power management in the plant electrical network, wherein each controller is configured for power management in a separate local process area. The controllers are adapted to communicate with each other over the communication network.

One of the drawbacks with existing methods that use a network to control multiple power management systems is that the methods are unable to exchange communications with the generator controller in each power management systems in order permit the generator controllers to exercise the internal combustion driven generators in each of the respective power management systems.

Another drawback with existing methods that use a network to control multiple power management systems is that the methods are unable to use the network to access multiple generator controllers where each generator controller operates an internal combustion engine driven generator that is part of a respective power management system and other electronic components that are part of a respective power management system. The existing methods also are unable to use the network to exchange communications with the generator controller in each of the multiple power systems in order permit the generator controllers to exercise the internal combustion driven generator and other electronic components in each of the respective power management systems.

### BRIEF DESCRIPTION OF THE DRAWINGS

FIG. 1 illustrates a schematic diagram of an example power management system where the electronic devices that are included in the power management system are generically labeled.
FIG. 2 illustrates a schematic diagram of example user interface information that may be used in a display that is part of the power management system shown in FIG. 1.
FIG. 3 is a block diagram that illustrates a diagrammatic representation of a machine in the example form of a computer system within which a set of instructions for causing the machine to perform any one or more of the methodologies discussed herein may be executed.
FIG. 4 is a flow diagram that illustrates an example method for using a network to control multiple power management systems.
FIG. 5 is a flow diagram that illustrates another example and method for using a network to control multiple power management systems.
FIG. 6 illustrates an example operation using the methods shown in FIGS. 4 and 5 for using a network to control multiple power management systems.
FIG. 7 illustrates another example operation using the methods shown in FIGS. 4 and 5 for using a network to control multiple power management systems.

### DETAILED DESCRIPTION

The following description and the drawings suffciently illustrate specific embodiments to enable those skilled in the art to practice them. Other embodiments may incorporate structural, logical, electrical, process, and other changes. Portions and features of some embodiments may be included in, or substituted for, those of other embodiments.

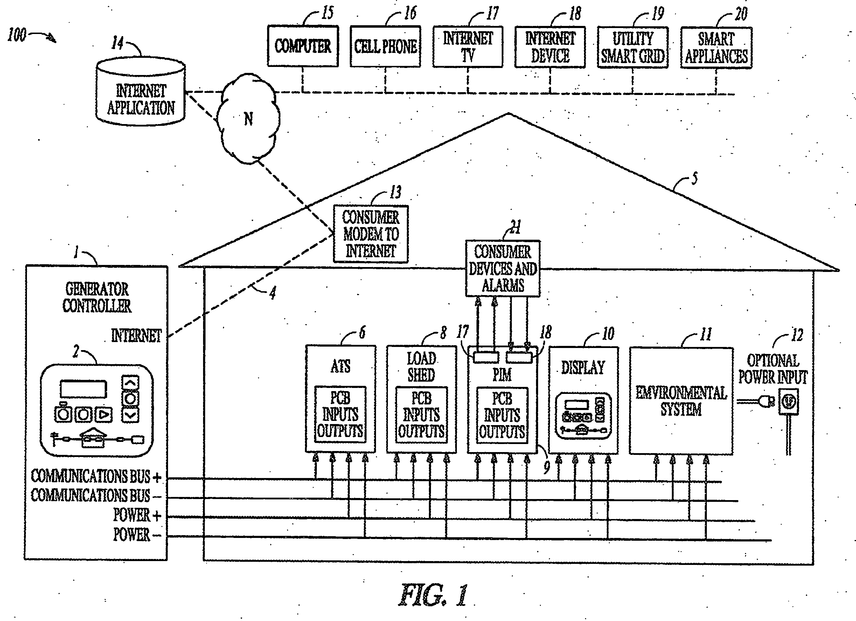

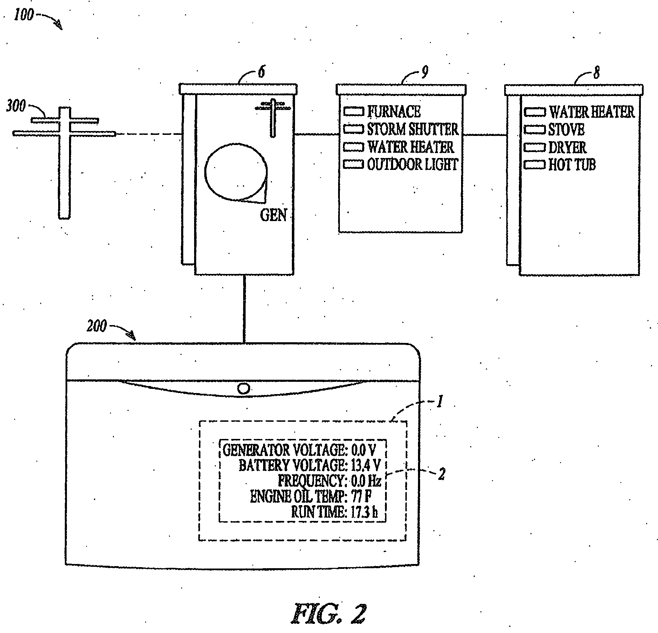

A method of using a network N to control a power management system 100 will now be described with reference to FIGS. 1 and 2. The method includes using the network N to access a generator controller 1 that is part of the power management systems 100. The method further includes using the network N to exchange communications with the generator controller 1 in order permit the generator controller 1 to control other electronic components that are part of the power management system 100.

In some embodiments, one type of electronic component that may form part of the power management system 100 is an automatic transfer switch 6. The type of and functionality of the automatic transfer switch 6 that is used in the power management system 100 will depend in part on the overall design of power management system 100.

Another type of electronic component that may form part of the power management system 100 is a load control module 8. The type and functionality of the load control module 8 that is used in the power management system 100 will depend in part on the overall design of power management system 100. As an example, the load control module 8 may add and/or shed various loads that are part of the power management system 100. In some embodiments, the load control module 8 may add and/or sheds loads according to conditions related to the operation of the power management system 100.

Yet another type of electronic component that may form part of the power management system 100 is an environmental monitoring system 11. The type and functionality of the environmental monitoring system 11 that is used in the power management system 100 will depend in part on the overall design of power management system 100.

As an example, the environmental monitoring system 11 may monitor temperature, humidity, wind, sunlight and precipitation. In addition, the environmental monitoring system 11 may monitor the existence of any weather alerts that occur in the location where the power management system 100 is located.

The environmental monitoring system 11 may also monitor the existence of any safety alerts that occur in the location where the power management system 100 is located (e.g., earthquakes, fires, floods, etc.). In addition, the environmental monitoring system 11 may also monitor whether there is any power outages in the location where the power management system 100 is located.

If the generator controller receives an indication as to the existence of any of the conditions described above (plus others not listed), the generator controller 1 may then operate the electronic components that make up the power management system in some prescribed manner. As an example, the generator controller 1 may exercise and/or operate the generator 200 when there is a severe weather alert.

In still other embodiments, the power management system 10 may include one or more load switching and sensor modules 9. The load switching and sensor module 9 may include various sensor inputs 17 and power switching outputs 18 that exchange signals and/or power with a variety of devices and/or alarms 21. The type and functionality of the sensor inputs 16 and power switching outputs 17 that are used in the load switching and sensor module 9 will depend in part on (i) the overall design of power management system 100; and (ii) the types of consumer devices and/or alarms 21 that are included in the power management system 100.

As an example, one of the devices 21 may be a sensor system that detects temperature, sunlight and/or time of day. The sensor sends signals to the sensor inputs 16 within the load switching and sensor module 9. The load switching and sensor module 9 then delivers signals to the generator controller 1.

Based upon the signals that are received from the sensor input 16, the generator controller sends a certain type of signal to the switching outputs 17. The switching outputs 17 may then operate sprinklers (i.e., another type of device 21) based on the switching outputs 17. It should be noted that the devices 21 that may be used in the power management system 100, and the applications where the generator controller 1 sends and receives from the load switching and sensor modules 9 is meant to includes any applications and/or devices that are known now.

In the example embodiments that are illustrated in FIGS. 1 and 2, using the network N to access a generator controller 1 that is part of the power management system 100 incudes connecting to the network N with an electronic device. As an example, connecting to the network N with an electronic device may include connecting to the network N with a personal computer 15.

Embodiments are also contemplated where connecting to the network N with an electronic device includes connecting to the network N with a home automation controller 19 and/or some form of smart appliance 20. It should be noted that connecting to the network N with an electronic device may further include connecting to the network N with an internet TV 17 or some other form of Internet device 18 that is known now.

In some embodiments, connecting to the network N with an electronic device includes connecting to the network N with a portable electronic device. Some example portable electronic devices include mobile phones 16 and tablets (not shown).

Embodiments are also contemplated where using the network N to access the generator controller 1 that is part of the power management system 100 includes maintaining a connection between the network N and the generator controller 1. It should be noted that the connection between the network N and the generator controller 1 may be maintained all of time or periodically depending on the functionality of the power management system 100.

In some embodiments, using the network N to access a generator controller 1 that is part of the power management system 100 includes using a server 14 on the network N to access the generator controller 1. The type of server 14 that is utilized to access the generator controller 1 will depend in part on (i) the type of generator controller 1 that is used in the power management system 100; (ii) the number and type of electronic components that are used in the power management system 100; and/or (iii) the operations that must be performed by the power management system 100.

It should be noted that using the server 14 on the network N to access the generator controller 1 may include (i) maintaining a connection between the server 14 and the generator controller 1 (as generically described above); and/or (ii) gathering data on the server 14 relating to the connection between the server 14 and the generator controller 1.

In some embodiments, using the server 14 on the network N to access the generator controller 1 includes gathering data on the server 14 from the generator controller 1 relating to the operation of the other electronic components in the power management system 100. The types of data that may be collected on the server 14 will depend in parts on the type and number of electronic components that are included in the power management system 100. As an example, the server 14 may collect data from the generator controller 1 related to the operation of the generator 200 (e.g., past and present voltage and frequency data) that is part of the power management system 100.

In addition, as generically discussed above, using a server 14 on the network N to access the generator controller 1 may include connecting to the server 14 on the network N with an electronic device. It should be noted that connecting to the server on the network N with an electronic device may include using programming on the server 14 that is designated for a particular electronic device (i.e., certain applications for certain devices). As an example, the electronic device may be a mobile phone 16 such that connecting to the server 14 on the network N with the mobile phone 16 includes using programming on the server 14 that is designated for the mobile phone 16.

In some embodiments, using a server 14 on the network N to access the generator controller 1 includes using an electronic device (similar to one of the electronic devices discussed above) to exchange data with the server 14. It should be noted that using an electronic device to exchange data with the server may include using programming on the electronic device to exchange data with the server 14 (i.e., the electronic device may include certain applications for certain servers). As an example, the electronic device may be a mobile phone 16 such that connecting to the server 14 on the network N with the mobile phone 16 includes using specialized programming on the mobile phone 16 that is designated for the server 14.

In some embodiments, the method further includes preventing unauthorized access to.the generator controller 1. It should be noted that preventing unauthorized access to the generator controller 1 may include using programming on a server 14 that is connected to the generator controller 1 to prevent unauthorized access to the generator controller 1.

As an example, preventing unauthorized access to the generator controller 1 may include requiring identification to permit access to the generator controller 1. In some embodiments, the generator controller 1 may include a generator display 2 that provides access to the generator controller 1 and the server 14. Access to the generator controller 1 and/or the server 14 (or any other components in the power management system 100) may be limited unless identification is entered into the generator display 2.

As an example, the power management system 100 may utilize encryption, passwords or any other security measure that is known now or developed in the future. The type of security measures that are utilized in the power management system 100 will depend in part on (i) the type and number of components 13 that are connected to the network N; and/or (ii) the identity and purpose of a user attempting to access the power management system (among other factors).

As another example, the power management system 100 may include one or more other additional displays 10 that provide access to the generator controller 1 and server 14. As discussed above with regard to generator display 2, access to the generator controller 1 and/or the server 14 (or any other components in the power management system 100) may be limited unless identification is entered in to the display 10.

Embodiments are also contemplated where using an electronic device to exchange data with the server 14 includes displaying information on the electronic device relating to operation of the power management system 100. In some embodiments, displaying information on the electronic device relating to operation of the power management system 100 may include displaying alphanumeric information relating to operation of the power management system 100. In other embodiments, displaying information on the electronic device relating to operation of the power management system 100 may include displaying illustrations (e.g., static graphics, moving graphics and videos among others) relating to operation of the power management system 100. In still other embodiments, displaying information on the electronic device relating to operation of the power management system 100 may include providing audio information relating to operation of the power management system 100.

Embodiments are also contemplated where displaying information on the electronic device relating to operation of the power management system 100 includes displaying power that is available to the power management system 100. As an example, displaying power that is available to the power management system 100 may include displaying power that is available from a generator 200 (and/or a primary power source such as a utility 300) in the power management system 100.

In some embodiments, displaying information on the electronic device relating to operation of the power management system 100 may include displaying each of the electronic components in the power management system 100. As an example, displaying each electronic component in the power management system 100 may include displaying data relating to the operation of each electronic component in the power management system 100.

The types of information that are displayed on the electronic device will vary depending on (i) the type and capabilities of each electronic component in the power management system 100; (ii) the type and capabilities of the generator controller 1 in the power management system 100; and/or (iii) type and capabilities of the electronic device that is communicating with the server 14 (among other factors). In one example embodiment, displaying data relating to the operation of each electronic component includes displaying power that is being consumed by each electronic component in the power management system.

As an example with reference to FIG. 2, a user may select the button next to the "hot tub" description (or select the "hot tub" description itself). Once selected, data relating to operation of the hot tub may be shown for the benefit of the user. The type of data that is displayed will depend in part on the capabilities of one or more the (i) hot tub; (ii) load switching and sensor module 9; (iii) generator controller 1; (iv) server 14; and (v) device where the information is displayed (i.e., the generator display 2, additional display 10 or particular electronic device).

Embodiments are also contemplated where using an electronic device to exchange data with the server 14 includes using the electronic device to update programming on the generator controller 1. As an example, a user may utilize the electronic device to change programming within the generator controller 1 relating to exercising the generator 200.

As another example, a user may utilize the electronic device to change programming within the load control module 8 relating to changing a priority list associate with adding and shedding loads. The use may reorganize the manner in which loads are shed or added during generator overload and/or under load conditions.

In addition, using an electronic device to exchange data with the server 14 may include using the electronic device to update programming on one of the electronic components. The ability to update an electronic component programming within the power management system 100 via the server 14 will depend in part on the capability of the electronic component to accept programming changes (i.e., whether a particular electronic component is a "smart" electronic component).

As an example, the power management system 100 may include a water heater that has a control which includes programming to keep the water at a certain temperature. This programming could be changed to maintain the water at a different temperature, or change the temperature based on flow activity with the water heater.

In some embodiments, using an electronic device to exchange data with the server 14 includes using the electronic device to schedule operations within the power management system 100. The number and type of operations that may be scheduled with the electronic device will depend in part on (i) the number and type of electronic components that are included in the power management system 100; and (ii) the overall configuration of the power management system 100.

As an example, using the electronic device to schedule operations within the power management system 100 may include storing timing parameters within the server 14 relating to operations within the power management system 100. One example timing parameter may be related to the operation of a sprinkler system. Another example timing parameter may be related the operation of a home lighting system. Still another example timing parameter may be related to an exercising schedule for the generator 200.

Embodiments are also contemplated where using the electronic device to schedule operations within the power management system 100 includes activating at least one of the electronic components within the power management system 100. As an example, the electronic device may be used turn on a hot tub before arriving at a location where the hot tub is located in order to make sure the hot tub is functional (e.g., by heating the water in the hot tub) before arriving at the location.

In some embodiments, using the electronic device to schedule operations within the power management system 100 may include displaying calendar data to facilitate scheduling operations within the power management system 100. The arrangement and display of the calendar on the electronic device will depend in part on the number and types of electronic components that are included in the power management system 100 as well as the display capabilities of the particular electronic device(s) that are used to schedule operations within the power management system 100.

It should be noted that using an electronic device to exchange data with the server 14 may include adding programming to the electronic device that operates the power management system 100. The ability to add programming to the electronic device allows the electronic device to remain updated as there are changes/improvements to the rest of the power management system 100.

In other embodiments, using an electronic device to exchange data with the server 14 may include using the electronic device to add programming to the server 14. The ability to add programming to the electronic device allows the server 14 to remain updated as there are changes/improvements to the rest of the power management system 100.

Embodiments are also contemplated where using the electronic device to add programming to the server 14 includes (i) delivering the programming to the generator controller 1 via the server 14; and/or (ii) delivering the programming to the electric components via the server 14 and the generator controller 1. The ability to deliver programming to the generator controller 1 and/or to the electric components via the server 14 allows the generator controller 1 and/or electric components to remain updated as there are changes/improvements to the rest of the power management system 100.

The method may further include collecting data with the electronic components, wherein the programming on each electric component operates each electric component based on the data. As an example, one of the electronic components may be a lighting system that includes a sensor that senses when it is dark. Once the sensors detect darkness, the electronic component (i.e., the lighting system) operates lights within the lighting system according to predefined operating characteristics.

In other embodiments, programming on the generator controller operates the power management system 100 based on the data received from the sensor. Therefore, the control associated with the lighting system (or some other electronic component in the power management system 100) is located in the generator controller 1 instead of the lighting system.

In still other embodiments, programming on the server operates the power management system 100 based on the data received from the sensor. Therefore, the control associated with the lighting system (or some other electronic component in the power management system 100) is located in the server 14 instead of the lighting system or the generator controller 1.

In yet another embodiment, programming on the electronic device operates the power management system 100 based on the data received from the sensor. Therefore, the control associated with the lighting system (or some other electronic component in the power management system 100) is located in the electronic device instead of the lighting system, the generator controller 1 or the server 14.

The method may further include displaying information on the generator controller 1 relating to a connection status between the generator controller 1 and the network N. In some embodiments, the connection status between the generator controller 1 and the network N may be displayed on the generator display 2 and/or one or more remote displays 10.

It should be noted that displaying information on the generator controller 1 may include (i) displaying information relating to testing the connection between the generator controller 1 and the network N; and/or (ii) displaying information as to whether a connection to the network N is available for the generator controller 1. The testing of the network N connection, and/or determination of network N availability, may be done using any checking and/or testing procedure that are known now or discovered in the future.

The method may further include providing environmental data to the server 14 such that using the network N to exchange communications with the generator controller 1 may include delivering the environmental data to the generator controller 1. Based on the received environmental data, the generator controller 1 may operates the other electronic components that are part of the power management system 100.

In the illustrated example embodiment, providing environmental data to the server 14 includes using the network N to supply the environmental data to the server 14. As an example, based on environmental data that is provided to the generator controller 1 (e.g., notification of severe weather), the generator controller 1 may test the performance capabilities of an electronic component (e.g., generator 200) that is part of the power management system 100.

The method may further include using the network N to notify a user when certain types of environmental data are supplied to the generator controller 1. The determination as to whether to notify a user of certain types of environmental data will depend in part on (i) the type of electronic components that are used in the power management system 100; and (ii) the type of environmental data that is received by the generator controller 1 (among other factors).

In addition, the manner in which a user is notified may vary depending on the number and types of electronic devices that are included in the power management system 100. As examples, an email message may be sent to computer 15 and/or a text message may be sent to mobile phone 16 when certain types of environmental data are received by the generator controller 1 (e.g. notification of an earthquake event).

The method may further include using the network N to notify a user of a changed condition within the power management system 100. In some embodiments, using the network N to notify a user of a changed condition within the power management system 100 includes using the network N to notify the user when one of the electronic components detects a particular condition.

As an example, using the network N to notify the user when one of the electronic components detects a particular condition may include using the network to notify the user when one of the electronic components detects carbon monoxide. It should be noted that the types of conditions that are detected within the power management system 100 will depend in part on the types of electronic components (e.g., sensors) that are included as part of the power management system 100.

In some embodiments, using the network N to notify a user of a changed condition within the power management system 00 may include using the network N to notify the user when one of the electronic components is deactivated/activated by the generator controller 1 (i.e., when the generator controller 1 performs a load shed/add operation). As an example using the network N to notify the user when one of the electronic components is deactivated by the generator controller 1 includes using the network N to notify the user when an air conditioner within the power management system is deactivated by the generator controller. The types of changed condition notifications that are supplied to the user will depend in part on the types of electronic components (i.e., loads) that are included in the power management system.

Embodiments are contemplated where the load control module 8 adds/sheds loads based on commands received from the generator controller 1. The generator controller 1 then notifies the user via the server 14 as to the status of each load. It should be noted that the generator controller may provide a report to the user relating to any load add/shed operations performed over a period of time (e.g., a day, week, month etc.).

In some embodiments, using the network N to notify the user when one of the electronic components is deactivated by the generator controller 1 may include using the network N to request a command from the user relating to deactivating the electric component. As an example, the generator controller 1 may send an inquiry to the user via the server 14 as to which load(s) to shed during a particular operating condition (e.g., when the generator 200 is exceeding recommended capacity).

Embodiments are also contemplated where using the network N to notify a user of a changed condition within the power management system 100 includes using the network N to provide a recommendation to the user relating to operation of the power management system 100. As an example, the generator controller 1 may send a recommendation to the user via the server 14 as to which load(s) to shed during a particular operating condition (e.g., when the generator 200 is exceeding recommended capacity).

In some embodiments, using the server 14 on the network N to exchange communications with the generator controller 1 may include synchronizing a server clock with a generator controller clock. As an example, synchronizing a server clock with a generator controller clock may includes using the network N to set the server clock (i.e., the server 14 may obtain a universal clock from some source that is also connected to the network). The method may further include synchronizing the generator controller clock with each clock in the other electronic components that form the power management system 100.

Embodiments are also contemplated where accessing the generator controller 1 using the server 14 includes creating a connection between the server 14 and generator controller 1. As an example, the generator controller 1 may store a predetermined address of the server 14 such that creating a connection between the server 14 and the generator controller 1 includes using the generator controller 1 to initiate the connection with the server 14 at the predetermined address.

It should be noted that the electronic devices that are included in the power management system 100 may also store a predetermined address of the server 14 such that the electronic devices are able to initiate a connection with the server 14 (and therefore any other part of the power management system 100) at the predetermined address. As an example, creating a connection between the server 14 and generator controller 1 may include using the electronic device to provide a serial number of the generator controller 1 to the server 14. In embodiments where the electronic device is used to provide a serial number of the generator controller 1 to the server 14, the server 14 may include a database that correlates the serial number of the generator controller 1 with a network address of the generator controller 1.

The methods described herein may permit improved control of the electronic components that are included in a power management system 100. The control may be exercised in a more efficient manner than is done with existing power management systems.

The methods may also allow a user to be readily informed as to the operation of the power management system. In addition, the methods may also provide a user with (i) recommendations relating to operation of the power management system; and/or (ii) inquiries that ask to how to operate the power management system 100 based on certain conditions.

The methods described herein may also permit a user to be notified of certain conditions that occur which can affect the operation of the power management system 100. In addition, the methods may also allow programming on the different devices that make up the power management system to be updated.

### Example Machine Architecture

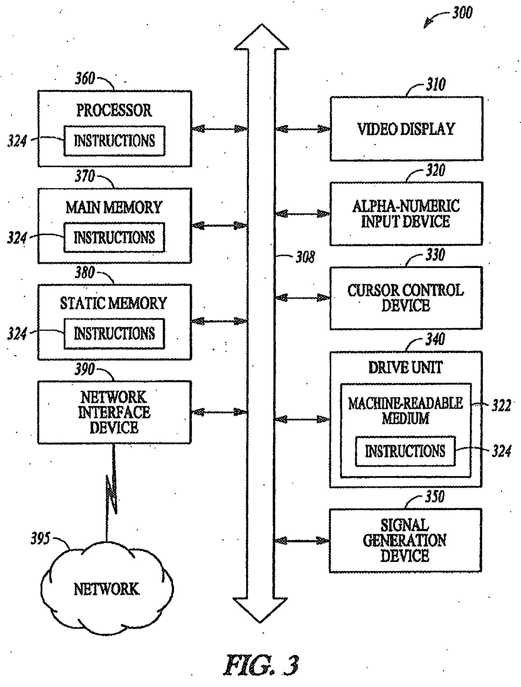

FIG. 3 is a block diagram that illustrates a diagrammatic representation of a machine in the example form of a computer system 300 within which a set of instructions for causing the machine to perform any one or more of the methodologies discussed herein may be executed. In some embodiments, the computer system 300 may operate in the capacity of a server (e.g., server 14 or generator controller 1) or a client machine (e.g., electronic devices in power, management system 100) in a server-client network environment, or as a peer machine in a peer-to-peer (or distributed) network environment (or any combination of the above as shown with respect power management system 100).

The computer system 300 may be a server computer, a client computer, a personal computer (PC), a tablet PC, a set-top box (STB), a Personal Digital Assistant (PDA), a cellular telephone, a Web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 300 may include a processor 360 (e.g., a central processing unit (CPU), a graphics processing unit (GPU) or both), a main memory 370 and astatic memory 380, all of which communicate with each other via a bus 308. The computer system 300 may further include a video display unit 310 (e.g., liquid crystal displays (LCD) or cathode ray tube (CRT)). The computer system 300 also may include an alphanumeric input device 320 (e.g., a keyboard), a cursor control device 330 (e.g., a mouse), a disk drive unit 340, a signal generation device 350 (e.g., a speaker), and a network interface device 390.

The disk drive unit 340 may include a machine-readable medium 322 on which is stored one or more sets of instructions (e.g., software 324) embodying any one or more of the methodologies or functions described herein. The software 324 may also reside, completely or at least partially, within the main memory 370 and/or within the processor 360 during execution thereof by the computer system 300, the main memory 370 and the processor 360 also constituting machine-readable media. It should be noted that the software 324 may further be transmitted or received over a network (e.g., network N in FIG. 1) via the network interface device 390.

In some embodiments, the software may reside partially, or wholly, with the one or more of the device that make up the power management system 100. As an example, the electronic devices may include some of the software; the server 14 may also include more of the software; the generator controller 1 may include yet more of the software and the various electronic components even more of the software.

While the machine-readable medium 322 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of example embodiments described herein. The term "machine-readable medium" shall accordingly be taken to include, but not be limited to, solid-state memories and optical and magnetic media.

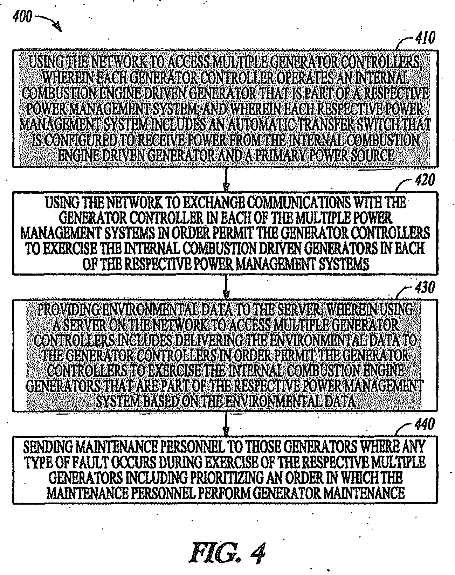

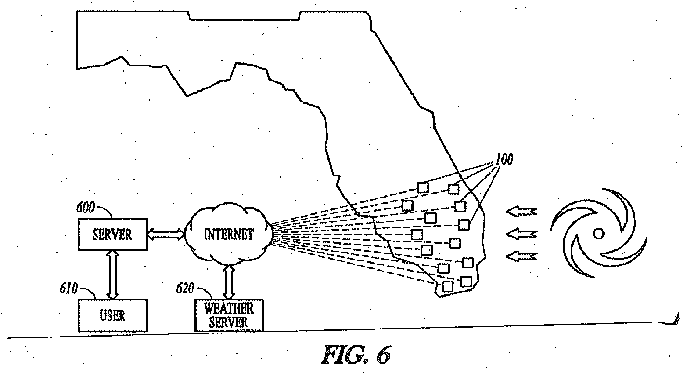

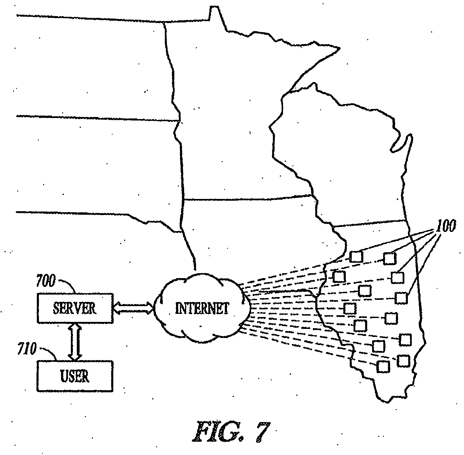

Referring now also to FIG. 4, some embodiments of the invention relate to a method [400] of using a network (see, e.g., Internet in FIGS. 6 and 7) to control multiple power management systems 100. The method [400] includes [410] using the network to access multiple generator controllers (see, e.g., generator controller 1 in FIG. 1) where each generator controller operates an internal combustion engine driven generator (see, e.g., generator 200 in FIG. 2) that is part of a respective power management system 100. Each respective power management system 100 includes an automatic transfer switch (see, e.g., automatic transfer switch 6 in FIG. 2) that is configured to receive power from the internal combustion engine driven generator and a primary power source (see, e.g., primary power source 300 in FIG. 2).

As described above with regard to a single power management system 100, [410] using the network to access multiple generator controllers may include connecting to the network with an electronic device (e.g., a personal computer or a portable electronic device). In some embodiments, [420] using the network to access multiple generator controllers includes using a server (see, e.g., servers 600 and 700 in FIGS..6 and 7) on the network to access multiple generator controllers.

The method [400] further includes [420] using the network to exchange communications with the generator controller in each of the multiple power management systems 100 in order permit the generator controllers to exercise the internal combustion driven generators in each of the respective power management systems 100.

The method [400] may further include [430] providing environmental data to the server using a weather server (see, e.g., weather server 620 FIG. 6) on the network to access multiple generator controllers includes delivering the environmental data to the generator controllers in order permit the generator controllers to exercise the internal combustion engine generators that are part of the respective power management system 100 based on the environmental data. It should be noted that [430] providing environmental data to the server may include using the network to supply the environmental data to the server. As an example, the data may be provided to the server (e.g., servers 600 and 700 in FIGS. 6 and 7) from a weather server 620 that monitors weather conditions.

In some embodiments, the server 600 selects which of the power management systems 100 to exchange communication with in order to exercise the respective internal combustion engine driven generators in those power management systems 100 based on the environmental data that is supplied to the respective generator controllers. FIG. 6 illustrates an example embodiment where the weather server 620 has notified the server 600 that a hurricane is approaching southern Florida. The server 600 then selects to exercise the power management systems 100 that are located in Southern Florida where the hurricane is going to strike. It should be noted that the method [400] may be utilized with other types of weather conditions and geographical areas.

The method [400] may further include using the network to notify a user (see, e.g., user 610 in FIG. 6) when any type of fault occurs within any of the multiple generators when the generator controllers exercise the respective multiple generators within the respective power management systems 100. As an example, the method [400] may further include [440] sending maintenance personnel to those generators where any type of fault occurs during exercise of the respective multiple generators including prioritizing an order in which the maintenance personnel perform generator maintenance.

In some embodiments, [410] using the network to access multiple generator controllers includes using the network to access multiple generator controllers within a particular geographic region. An example is shown in the FIG. 7, where a user 710 utilizes the server 700 to select to exercise the power management systems 100 that are located in Illinois. The power management systems 100 that are located in Illinois may be serviced by a particular dealership, manufacturer or other service organization.

By scheduling an exercise of all generators in a particular area, a dealership may be able to develop a well-planned service schedule for those generators that require some type of maintenance after performing the exercise. It should be noted that the method [400] may be utilized with any type of geographical location.

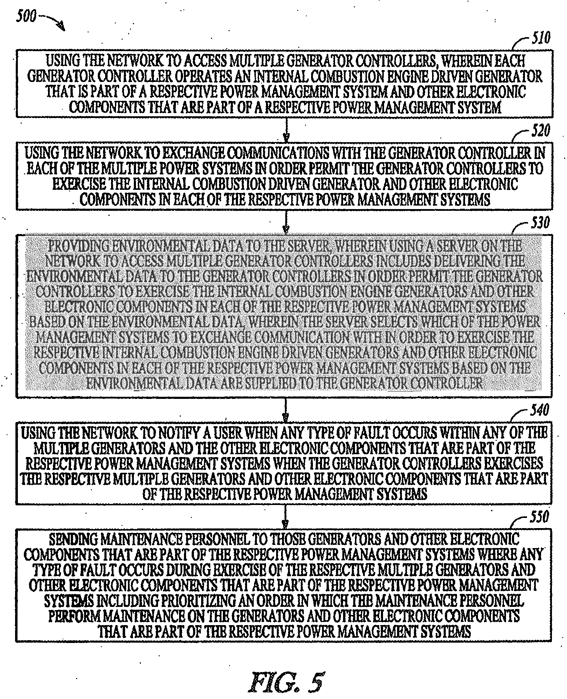

Referring now also to FIG. 5, some embodiments of the invention relate to another example method [500] of using a network (see, e.g., the Internet in FIGS. 6 and 7) to control multiple power management systems 100. The method [500] includes [510] using the network to access multiple generator controllers (see, e.g., generator controller 1 in FIG. 1) where each generator controller operates an internal combustion engine driven generator (see, e.g., generator 200 in FIG. 2) that is part of a respective power management system 100 and other electronic components (see, e.g., automatic transfer switch 6, load control module 8, load switching and sensor module 9 that includes various sensor inputs 17 and power switching outputs 18 that exchange signals and/or power with a variety of devices and/or alarms 21, display 10 and/or environmental system 11 as shown in FIGS. 1 and 2) that are part of the respective power management system 100.

As described above with regard to a single power management system 100, [510] using the network to access multiple generator controllers may include connecting to the network with an electronic device (e.g., a personal computer or a portable electronic device). In some embodiments, [510] using the network to access multiple generator controllers includes using a server (see, e.g., servers 600 and 700 in FIGS. 6 and 7) on the network to access multiple generator controllers.

The method [500] further includes [520] using the network to exchange communications with the generator controller in each of the multiple power systems 100 in order permit the generator controllers to exercise the internal combustion driven generator and other electronic components in each of the respective power management systems 100.

The method [500] may further include [530] providing environmental data to the server (see again, e.g., servers 600 and 700 in FIGS. 6 and 7) such that [510] using a server on the network to access multiple generator controllers includes delivering the environmental data to the generator controllers in order permit the generator controllers to exercise the internal combustion engine generators and other electronic components in each of the respective power management systems based on the environmental data. The server (600 or 700) selects which of the power management systems 100 to exchange communication with in order to exercise the respective internal combustion engine driven generators and other electronic components in each of the respective power management systems 100 based on the environmental data that is supplied to the generator controllers.

It should be noted that [530] providing environmental data to the server may include using the network to supply the environmental data to the server. As an example, the data may be provided to the server (e.g., servers 600 and 700 in FIGS. 6 and 7) from a weather server 620 that monitors weather conditions.

The method [500] may further include [540] using the network to notify a user (see, e.g., user 610 in FIG. 6) when any type of fault occurs within any of the multiple generators and the other electronic components that are part of the respective power management systems 100 when the generator controllers exercises the respective multiple generators and other electronic components that are part of the respective power management systems 100. As an example, the method [500] may further include [540] sending maintenance personnel to those generators and other electronic components that are part of the respective power management systems 100 where any type of fault occurs during exercise of the respective multiple generators and other electronic components that are part of the respective power management systems 100. In some embodiments, sending maintenance personnel to those generators and other electronic components that are part of the respective power management systems 100 may include prioritizing an order in which the maintenance personnel perform maintenance on the generators and other electronic components that are part of the respective power management systems 100.

As discussed above, FIG. 6 illustrates an example embodiment where the weather server 620 has notified the server 600 that a hurricane is approaching southern Florida. The server 600 then selects to exercise the power management systems 100 that are located in Southern Florida where the hurricane is going to strike. In addition, as discussed above, in some embodiments, [510] using the network to access multiple generator controllers may include using the network to access multiple generator controllers within a particular geographic region (see, e.g. Illinois in FIG. 7).

Thus, a computerized method and system are described herein. Although the present invention has been described with reference to specific example embodiments, it will be evident that various modifications and changes may be made to these embodiments without departing from the scope of the invention as defined in the appended claims.

## Claims

1. A method of using a network (N) to control multiple power management systems (100), the method comprising:
using the network (N) to access multiple generator controllers (1), wherein each generator controller (1) operates an internal combustion engine driven generator (200) that is part of a respective power management system (100) and other electronic components (21) that are part of a respective power management system 100); and
using the network (N) to exchange communications between a server (14;600) on the network (N) and the generator controller (1) in a selected one of the multiple power management systems (100) in order to permit the generator controllers (1) to exercise the internal combustion driven generator (200) and other electronic components (21) in each of the respective power management systems (100).

2. The method of claim 1, wherein using the network (N) to access multiple generator controllers (1) includes connecting to the network (N) with an electronic device (21).

3. The method of claim 2, wherein connecting to the network (N) with an electronic device (21) includes connecting to the network (N) with a portable electronic device.

4. The method of any of claims 1 to 3, wherein using the network (N) to access multiple generator controllers (1) includes using a server on the network (N) to access multiple generator controllers (1).

5. The method of claim 4, wherein using a server on the network (N) to access multiple generator controllers (1) includes displaying a status of each internal combustion engine driven generator (200) and the other electronic components (21) in each of the respective power management systems (100).

6. The method of claim 4 or 5, further comprising providing environmental data to the server, wherein using a server on the network (N) to access multiple generator controllers (1) includes delivering the environmental data to the generator controllers (1) in order permit the generator controllers (1) to exercise the internal combustion engine driven generators (200) that are part of the respective power management system (100) based on the environmental data.

7. The method of claim 6, wherein providing environmental data to the server includes using the network (N) to supply the environmental data to the server.

8. The method of claim 6 or 7, wherein the server selects which of the power management systems (100) to exchange communication with in order to exercise the respective internal combustion engine driven generators (200) in those power management systems (100) based on the environmental data are supplied to the generator controller (1).

9. The method of any of claims 1 to 8, further comprising using the network (N) to notify a user when any type of fault occurs within any of the multiple generators (200) when the generator controllers (1) exercise the respective multiple generators (200).

10. The method of claim 9, further comprising sending maintenance personnel to those generators (200) where any type of fault occurs during exercise of the respective multiple generators (200) including prioritizing an order in which the maintenance personnel perform generator maintenance.

11. The method of any of claims 1 to 10, using the network (N) to access multiple generator controllers (1) includes using the network (N) to access multiple generator controllers (1) within a particular geographic region.

12. The method of any of claims 1 to 11, wherein the other electronic components (21) include at least one of an automatic transfer switch (6), a load control module (8) and sensor inputs (17) and power switching outputs (18).

## Patentansprüche

1. Verfahren zum Nutzen eines Netzwerks (N) zum Steuern mehrerer Energieverwaltungssysteme (100), wobei das Verfahren umfasst:
Nutzen des Netzwerks (N) zum Zugriff auf mehrere Generator-Steuereinheiten (1), wobei jede Generator-Steuereinheit (1) einen von einem Verbrennungsmotor angetriebenen Generator (200), der Teil eines jeweiligen Energieverwaltungssystems (100) ist, und andere elektronische Komponenten (21) betätigt, die Teil eines entsprechenden Energieverwaltungssystems sind; und
Nutzen des Netzwerks (N) zum Kommunikationsaustausch zwischen einem Server (14; 600) auf dem Netzwerk (N) und der Generator-Steuereinheit (1) in einem ausgewählten aus der Mehrzahl von Energieverwaltungssystemen (100), um es den Generator-Steuereinheiten (1) zu ermöglichen, den vom Verbrennungsmotor angetriebenen Generator (200) und andere elektronische Komponenten (21) in jedem der jeweiligen Energieverwaltungssysteme (100) zu betätigen.

2. Verfahren nach Anspruch 1, wobei das Nutzen des Netzwerks (N) zum Zugriff auf die mehreren Generator-Steuereinheiten (1) das Verbinden des Netzwerks N) mit einer elektronischen Vorrichtung (21) umfasst.

3. Verfahren nach Anspruch 2, wobei das Verbinden des Netzwerks (N) mit einer elektronischen Vorrichtung (21) das Verbinden des Netzwerks (N) mit einer tragbaren elektronischen Vorrichtung umfasst.

4. Verfahren nach einem der Ansprüche 1 bis 3, wobei das Nutzen des Netzwerks (N) zum Zugriff auf mehrere Generator-Steuereinheiten (1) das Nutzen eines Servers auf dem Netzwerk (N) zum Zugriff auf mehrere Generator-Steuereinheiten (1) umfasst.

5. Verfahren nach Anspruch 4, wobei das Nutzen eines Servers auf dem Netzwerks (N) zum Zugriff auf mehrere Generator-Steuereinheiten (1) das Anzeigen eines Status jedes von einem Verbrennungsmotor angetriebenen Generators (200) und der anderen elektronischen Komponenten (21) in jedem der jeweiligen Energieverwaltungssysteme (100) umfasst.

6. Verfahren nach Anspruch 4 oder 5, ferner umfassend das Bereitstellen von Umgebungsdaten für den Server, wobei das Nutzen eines Servers auf dem Netzwerk (N) zum Zugriff auf mehrere Generator-Steuereinheiten (1) das Übergeben der Umgebungsdaten an die Generator-Steuereinheiten (1) zum Ermöglichen einer Betätigung der vom Verbrennungsmotor angetriebenen Generatoren (200), die Teil des jeweiligen Energieverwaltungssystems (100 sind, basierend auf den Umgebungsdaten umfasst.

7. Verfahren nach Anspruch 6, wobei das Bereitstellen von Umgebungsdaten für den Server das Nutzen des Netzwerks (N) zum Zuführen der Umgebungsdaten an den Server umfasst.

8. Verfahren nach Anspruch 6 oder 7, wobei der Server auswählt, mit welchem der jeweiligen Energieverwaltungssysteme (100) ein Kommunikationsaustausch erfolgen soll, um die jeweiligen von einem Verbrennungsmotor angetriebenen Generatoren (200) in diesen Energieverwaltungssystemen (100) basierend auf den der Generator-Steuereinheit (1) zugeführten Umgebungsdaten zu betätigen.

9. Verfahren nach einem der Ansprüche 1 bis 8, ferner umfassend das Nutzen des Netzwerks (N) zum Benachrichtigen eines Nutzers, wenn irgendeine Art von Fehler in einem der mehreren Generatoren (200) auftritt, wenn die Generator-Steuereinheiten (1) die jeweiligen mehreren Generatoren (200) betätigen.

10. Verfahren nach Anspruch 9, ferner umfassend das Senden von Wartungspersonal zu jenen Generatoren (200), wo irgendeine Art von Fehler während dem Betätigen der jeweiligen mehreren Generatoren (200) auftritt, einschließlich des Priorisierens einer Reihenfolge, in der das Wartungspersonal die Generatorwartung durchführt.

11. Verfahren nach einem der Ansprüche 1 bis 10, wobei das Nutzen des Netzwerks (N) zum Zugriff auf mehrere Generator-Steuereinheiten (1) das Nutzen des Netzwerks (N) zum Zugriff auf mehrere Generator-Steuereinheiten (1) innerhalb einer bestimmten geographischen Region umfasst.

12. Verfahren nach einem der Ansprüche 1 bis 11, wobei die anderen elektronischen Komponenten (21) zumindest einen automatischen Transferschalter (6), ein Laststeuermodul (8) und Sensoreingangssignale (17) und/oder Leistungsschaltausgangssignale (18) umfasst.

## Revendications

1. Procédé d'utilisation d'un réseau (N) pour commander plusieurs systèmes de gestion de puissance (100), le procédé comprenant le fait :
d'utiliser le réseau (N) pour accéder à plusieurs dispositifs de commande de générateur (1), dans lequel chaque dispositif de commande de générateur (1) fait fonctionner un générateur entraîné par un moteur à combustion interne (200) qui fait partie d'un système de gestion de puissance respectif (100) et d'autres composants électroniques (21) qui font partie d'un système de gestion de puissance respectif (100) ; et
d'utiliser le réseau (N) pour échanger des communications entre un serveur (14, 600) sur le réseau (N) et le dispositif de commande de générateur (1) dans un système sélectionné parmi les plusieurs systèmes de gestion de puissance (100) afin de permettre aux dispositifs de commande de générateur (1) d'exercer le générateur entraîné par un moteur à combustion interne (200) et d'autres composants électroniques (21) dans chacun des systèmes de gestion de puissance respectifs (100).

2. Procédé de la revendication 1, dans lequel l'utilisation du réseau (N) pour accéder à plusieurs dispositifs de commande de générateur (1) comporte le fait de se connecter au réseau (N) avec un dispositif électronique (21).

3. Procédé de la revendication 2, dans lequel la connexion au réseau (N) avec un dispositif électronique (21) comporte le fait de se connecter au réseau (N) avec un dispositif électronique portable.

4. Procédé de l'une des revendications 1 à 3, dans lequel l'utilisation du réseau (N) pour accéder à plusieurs dispositifs de commande de générateur (1) comporte le fait d'utiliser un serveur sur le réseau (N) pour accéder à plusieurs dispositifs de commande de générateur (1).

5. Procédé de la revendication 4, dans lequel l'utilisation d'un serveur sur le réseau (N) pour accéder à plusieurs dispositifs de commande de générateur (1) comporte le fait d'afficher un état de chaque générateur entraîné par un moteur à combustion interne (200) et des autres composants électroniques (21) dans chacun des systèmes de gestion de puissance respectifs (100).

6. Procédé de la revendication 4 ou 5, comprenant en outre le fait de fournir des données environnementales au serveur, dans lequel l'utilisation d'un serveur sur le réseau (N) pour accéder à plusieurs dispositifs de commande de générateur (1) comporte le fait de distribuer des données environnementales aux dispositifs de commande de générateur (1) afin de permettre aux dispositifs de commande de générateur (1) d'exercer les générateurs entraînés par un moteur à combustion interne (200) qui font partie du système de gestion de puissance respectif (100) sur la base des données environnementales.

7. Procédé de la revendication 6, dans lequel la fourniture des données environnementales au serveur comporte le fait d'utiliser le réseau (N) pour fournir les données environnementales au serveur.

8. Procédé de la revendication 6 ou 7, dans lequel le serveur sélectionne parmi les systèmes de gestion de puissance (100) celui avec lequel il va échanger des communications afin d'exercer les générateurs entraînés par un moteur à combustion interne respectifs (200) dans ces systèmes de gestion de puissance (100) sur la base des données environnementales fournies au dispositif de commande de générateur (1).

9. Procédé de l'une des revendications 1 à 8, comprenant en outre le fait d'utiliser le réseau (N) pour informer un utilisateur lorsqu'un type quelconque de défaut se produit dans l'un des plusieurs générateurs (200) au moment où les dispositifs de commande de générateur (1) exercent les plusieurs générateurs respectifs (200).

10. Procédé de la revendication 9, comprenant en outre le fait d'envoyer le personnel de maintenance à ces générateurs (200) où un type quelconque de défaut se produit pendant l'exercice des plusieurs générateurs respectifs (200), y compris le fait de hiérarchiser un ordre dans lequel le personnel de maintenance effectue la maintenance de générateur.

11. Procédé de l'une des revendications 1 à 10, l'utilisation du réseau (N) pour accéder à plusieurs dispositifs de commande de générateur (1) comporte le fait d'utiliser le réseau (N) pour accéder à plusieurs dispositifs de commande de générateur (1) dans une région géographique particulière.

12. Procédé de l'une des revendications 1 à 11, dans lequel les autres composants électroniques (21) comportent au moins un élément parmi un commutateur de transfert automatique (6), un module de commande de charge (8) et des entrées de capteur (17) et des sorties de commutation de puissance (18).
